# FASCICULE DE BREVET EUROPEEN

(11) **EP 1 723 461 B1**
(45) Date de publication et mention de la délivrance du brevet: **17.06.2009**
(21) Numéro de dépôt: 05717410.4
(22) Date de dépôt: 13.01.2005
(51) Int. Cl.: G02B 26/08, G02B 5/08

(54) **MIROIR BIMORPHE AVEC DEUX COUCHES PIEZO-ELECTRIQUES SEPAREES PAR UNE AME CENTRALE EN MATERIAU SEMI-RIGIDE**
BIMORPHER SPIEGEL MIT ZWEI DURCH EINEN ZENTRALKERN AUS HALB-FLEXIBLEM MATERIAL GETRENNTEN PIEZOELEKTRISCHEN SCHICHTEN
BIMORPH MIRROR PROVIDED WITH TWO PIEZOELECTRIC LAYERS SEPARATED BY A CENTRAL CORE MADE OF A SEMI-RIGID MATERIAL

(30) Priorité: 06.02.2004 FR 0401194
(43) Date de publication de la demande: 22.11.2006
(60) Demande divisionnaire: 07009490.9
(73) Titulaire: SOCIETE EUROPEENNE DE SYSTEMES OPTIQUES S.E.S.O., 13792 Aix-en-Provence Cedex 3 (FR)
(72) Inventeur: CARRE, Jean-François, F-84120 PERTUIS (FR); FERME, Jean-Jacques, F-13880 VELAUX (FR)
(74) Mandataire: Jacquard, Philippe Jean-Luc
(86) Numéro de dépôt international: PCT/FR2005/000075
(87) Numéro de publication internationale: WO 2005/085931

(56) Documents cités:
- GB-A- 2 238 880
- US-A- 4 298 247
- US-A1- 2003 107 828
- DATABASE WPI Section EI, Week 199424 Derwent Publications Ltd., London, GB; Class V06, AN 1994-199023 XP002332622 & SU 1 808 159 A3 (IKRAMOV A V) 7 avril 1993 (1993-04-07)

## Description

La présente invention a pour objet un miroir bimorphe. Un miroir bimorphe est réalisé de manière classique par superposition de deux céramiques piézo-électriques, et au moins une électrode de commande est disposée à l'interface entre les deux céramiques pour faire varier la courbure du miroir en fonction d'une tension électrique appliquée aux céramiques piézo-électriques. De ce fait, plus le miroir est mince plus la variation du rayon de courbure est importante.

De plus, la fabrication des céramiques connaît des limitations en ce qui concerne la largeur maximale qui peut être obtenue, ce qui a pour conséquence l'obligation de réaliser des assemblages avec des segments de céramique, ce qui influence la raideur et/ou la stabilité du miroir bimorphe. En particulier, la raideur et la stabilité sont des paramètres importants pour le polissage du miroir qui intervient nécessairement après assemblage du miroir bimorphe.

Des miroirs bimorphes sont connus par US 2003/107828, GB 2238880 et US 4298247.

Un objet de l'invention est un miroir bimorphe présentant une raideur plus élevée qu'un miroir de l'Art Antérieur.

Un autre objet de l'invention est un miroir bimorphe présentant une stabilité plus élevée qu'un miroir de l'Art Antérieur.

Encore un autre objet de l'invention est un miroir bimorphe qui puisse être réalisé dans de grandes dimensions par exemple de l'ordre d'un mètre. L'invention est définie par les revendications ci-jointes .

Au moins un objet précité est atteint grâce à un miroir bimorphe présentant une première et une deuxième couches en céramique piézo-électrique ainsi qu'au moins une électrode permettant de faire varier au moins une courbure du miroir en fonction d'au moins une tension électrique appliquée aux céramiques piézo-electriques, **caractérisé en ce que** la première et la deuxième couche sont séparées par une âme centrale, en matériau tel que du verre ou de la silice, qui forme une poutre semi-rigide.

L'épaisseur e de l'âme centrale est comprise entre 1 mm et 80 mm, et elle peut être supérieure à 2 mm ou bien à 3 mm, ou bien encore à 5 mm. L'épaisseur totale E du miroir bimorphe est par exemple comprise entre 10 mm et 150 mm.

Le miroir bimorphe peut être **caractérisé en ce que** la première et la deuxième couche en céramique piézo-électrique sont formés d'une pluralité d'éléments céramiques placés côte à côte le long de plans dits de coupure, et en ce que les plans de coupure de ladite deuxième couche sont décalés dans au moins une direction par rapport aux plans de coupure de ladite première couche.

Il peut alors être **caractérisé en ce que** ledit décalage entre les éléments piézo-électriques selon au moins une direction est égal à la moitié d'un pas P selon lequel les éléments piézo-électriques sont disposés dans cette direction.

L'invention sera mieux comprise à l'aide de la description qui va suivre, donnée à titre d'exemple non limitatif, en liaison avec les dessins dans lesquels :
- la figure 1 illustre un miroir bimorphe de l'Art Antérieur,
- la figure 2 illustre un miroir bimorphe selon la présente invention,
les figures 3a à 3d représentent un miroir bimorphe selon un mode de réalisation préféré de l'invention, la figure 3a en étant une vue latérale, la figure 3b un détail agrandi de l'encadré de la figure 3a, et la figure 3c une vue suivant B, alors que la figure 3d illustre les électrodes de pilotage.

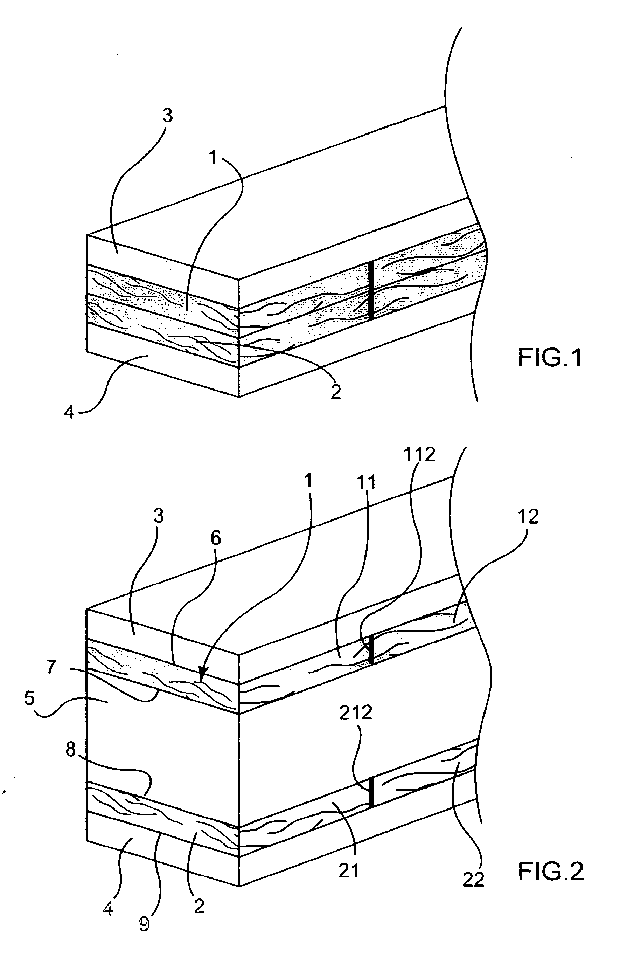

Selon la figure 1, un miroir bimorphe de l'Art Antérieur comporte deux couches céramiques piézo-électriques empilées 1 et 2, prises en sandwich entre deux couches dites de peau 3 et 4 en verre ou en silicium dont l'une au moins est utilisée comme miroir. Ces miroirs, utilisés notamment en optique adaptative, ont une courbure qui varie en fonction d'une tension électrique appliquée aux céramiques piézo-électriques.

Cependant, l'épaisseur des miroirs bimorphes est limitée à une valeur de l'ordre de 25 mm par l'épaisseur des céramiques piézo-électriques dont la fabrication définit une épaisseur maximale et par l'épaisseur des couches de peau 3 et 4, car lorsque cette épaisseur augmente, la courbure dynamique du miroir diminue.

Selon l'invention, on interpose entre les couches 1 et 2 une couche centrale ou âme 5 en un matériau tel que le verre ou le silice.

Cette âme 5 présente plusieurs avantages :
- elle permet d'améliorer l'efficacité de chaque céramique en l'éloignant de la fibre neutre du miroir, qui est située sensiblement dans le plan médian de l'âme 5,
- elle permet d'ajouter une épaisseur qui augmente l'inertie du miroir et donc sa raideur et sa stabilité,
- du fait qu'elle est continue sur la longueur du miroir, elle présente un effet très favorable sur la stabilité, car elle agit comme une poutre semi-rigide. Ceci permet de réaliser des miroirs de grande longueur, par exemple un mètre, sans perte de stabilité ni de gamme de courbure.

L'épaisseur e de cette âme centrale 5 peut être définie en fonction des caractéristiques de courbure recherchées. En effet, une augmentation de cette épaisseur augmente la raideur du miroir, mais également l'efficacité des actionneurs piézo-électriques en raison de leur éloignement progressif de la fibre neutre. A chaque épaisseur, correspond ainsi une caractéristique de courbure en fonction de la tension appliquée. L'épaisseur adéquate peut donc être déterminée expérimentalement ou à l'aide d'un calcul de déformation par éléments finis. En pratique, il est avantageux de mettre en oeuvre une épaisseur e comprise entre 1 et 80 mm. L'épaisseur e du miroir bimorphe est par exemple comprise entre 10 mm et 150 mm, et notamment supérieure à 25 mm.

Les figures montrent des couches piézo-électriques qui sont formées d'une pluralité d'éléments céramiques 11,12 et 21,22 ... placés côte à côte selon une dimension ou selon un réseau à deux dimensions le long de plans de coupure (112, 123, 134, ..., 178, 212, 223, 234..., 267) qui sont perpendiculaires aux faces principales 6, 7, 8, 9 desdites couches 1 et 2.

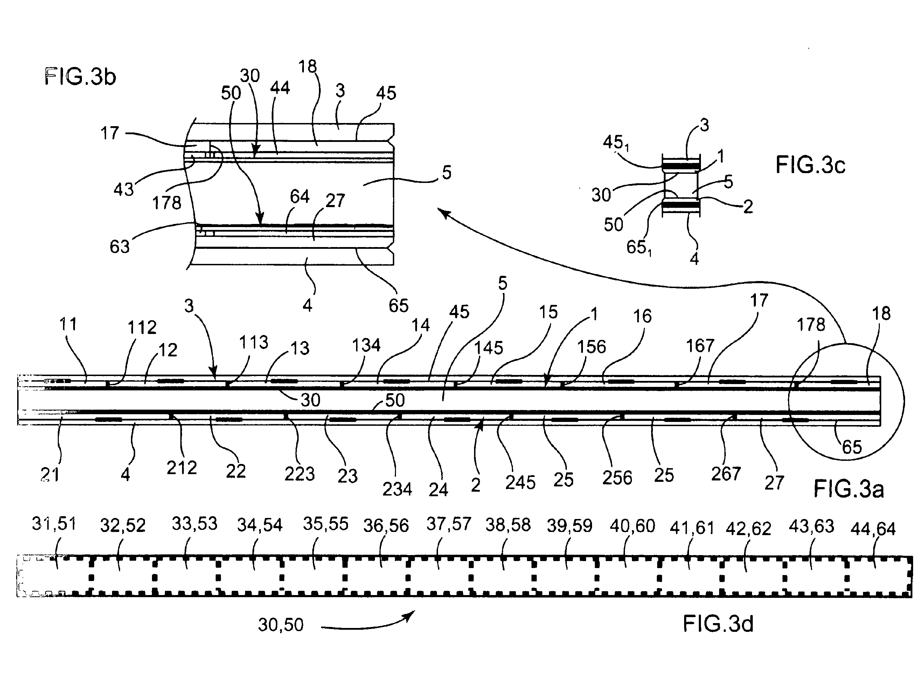

Avantageusement, l'invention prévoit (voir figures 3a et 3c) de décaler parallèlement auxdites faces principales les plans de coupure (212, 223, 234, ..., 267) de la couche 2 par rapport aux plans de coupure (112, 123, 134, ... 178) de la couche 1, par exemple en les décalant d'un demi-pas, selon au moins une direction parallèle à ces faces principales. Ceci permet de rigidifier la structure, même si elle ne comporte pas d'âme 5.

Les figures 3a à 3d montrent la disposition des électrodes de commande des couches céramiques 1 et 2. II existe tout d'abord entre les couches 1 et 3 une électrode commune 45 continue sur toute la longueur du miroir avec une prise de contact latérale 45₁ (Fig. 3d), et entre les couches 2 et 4 une électrode commune 65 continue sur toute la longueur du miroir, avec une prise de contact latérale 65₁ (Fig. 3d). Il existe ensuite entre la couche 1 et l'âme 5 une pluralité d'électrodes de pilotage désignées par le repère général 30. Il y a ainsi dans cet exemple 14 électrodes de pilotage 31 à 44 avec autant de plages de prises de contact sur un bord latéral du dispositif pour piloter la couche 1. II existe enfin entre la couche 3 et l'âme 5 une pluralité d'électrodes de pilotage désignées par le repère général 30. Il y a ainsi dans cet exemple 14 électrodes de pilotage 51 à 64 disposées en vis-à-vis des électrodes 31 à 44, pour piloter la couche 3, avec autant de plages de prises de contact sur un bord latéral du dispositif.

Les éléments piézo-électriques des couches 1 et 2 étant montés de manière classique avec des polarités inversées, une même tension appliquée aux électrodes de pilotage en vis-à-vis (31,51 ; 32,52, etc...) produit un déplacement en compression pour l'une des couches et en traction pour l'autre d'où un mouvement de courbure du miroir puisque les couches 1 et 2 sont disposées de part et d'autre de la fibre neutre.

## Revendications

1. Miroir bimorphe présentant une première et une deuxième couches actives en céramique piézo-électrique montées avec des polarités inverses, ainsi qu'au moins un électrode permettant de faire varier au moins une courbure du miroir en fonction d'au moins une tension électrique appliquée aux céramiques piézo-électriques, **caractérisé en ce que** la première (1) et la deuxième (2) couche en céramique piézo-électrique sont séparées par une âme centrale (5), qui forme une poutre semi-rigide, l'épaisseur (e) de l'âme centrale (5) étant comprise entre 1 et 80 mm, et **en ce qu'**il comporte des électrodes de pilotage en vis-à-vis permettant de faire varier au moins une dite courbure du miroir en fonction d'une même tension électrique qui leur est appliquée et qui produit un déplacement en compression pour l'une des couches et en traction pour l'autre.

2. Miroir bimorphe selon la revendication 1, **caractérisé en ce que** l'épaisseur (e) de l'âme centrale (5) est comprise entre 2 et 80 mm.

3. Miroir bimorphe selon la revendication 2, **caractérisé en ce que** l'épaisseur (e) de l'âme centrale (5) est comprise entre 5 et 80 mm.

4. Miroir bimorphe selon l'une des revendications précédentes, **caractérisé en ce que** ladite âme centrale est constituée d'un matériau choisi parmi le verre et la silice.

5. Miroir bimorphe selon l'une des revendications précédentes, **caractérisé en ce que** la première (1) et la deuxième (2) couche en céramique piézo-électrique sont prises en sandwich entre deux couches de peau (3,4) par exemple en verre ou en silicium.

6. Miroir bimorphe selon l'une des revendications précédentes, **caractérisé en ce qu'**il présente une épaisseur totale (E) comprise entre 10 mm et 150 mm.

7. Miroir bimorphe selon l'une des revendications précédentes, **caractérisé en ce que** la première (1) et la deuxième (2) couche en céramique piézo-électrique sont formées d'une pluralité d'éléments céramiques placés côte à côte dans au moins une direction le long de plans de coupure perpendiculaires aux faces principales desdites couches, et **en ce que** les plans de coupure (212, 223, ....) de ladite deuxième couche (2) sont décalés, dans une direction parallèles aux dites faces principales, par rapport aux plans de coupure (112, 123, ...) de ladite première couche (1).

8. Miroir bimorphe selon la revendication 7, **caractérisé en ce que** ledit décalage entre les éléments piézo-électriques selon au moins une direction est égal à la moitié d'un pas P selon lequel les éléments piézo-électriques sont disposés dans cette direction.

## Claims

1. A bimorph mirror presenting first and second active layers of piezoelectric ceramic mounted with opposite polarities together with at least one electrode serving to vary at least one curvature of the mirror as a function of at least one electrical voltage applied to the piezoelectric ceramics, the mirror being **characterized in that** the first (1) and second (2) layers of piezoelectric ceramic are separated by a central core (5) which forms a semirigid beam, the thickness (e) of the central core (5) lying in the range 1 mm to 80 mm, and **in that** it comprises control electrodes facing each other allowing to change at least one said curvature of the mirror as a function of an applied voltage, which induces a compression displacement for one of the layers and a traction displacement for the other one.

2. A bimorph mirror according to claim 1, **characterized in that** the thickness (e) of the central core (5) lies in the range 2 mm to 80 mm.

3. A bimorph mirror according to claim 2, **characterized in that** the thickness (e) of the central core (5) lies in the range 5 mm to 80 mm.

4. A bimorph mirror according to any preceding claim, **characterized in that** said central core is constituted by a material selected from glass and silica.

5. A bimorph mirror according to any preceding claim, **characterized in that** the first and second layers (1, 2) of piezoelectric ceramic are sandwiched between two skin layers (3, 4), e.g. of glass or of silicon.

6. A bimorph mirror according to any preceding claim, **characterized in that** it presents a total thickness (E) lying in the range 10 mm to 150 mm.

7. A bimorph mirror according to any preceding claim, **characterized in that** the first (1) and second (2) layers of piezoelectric ceramic are formed by a plurality of ceramic elements placed side by side in at least one direction along section planes perpendicular to the principal faces of said layers, and **in that** the section planes (212, 223, ...) of said second layer (2) are offset, in at least one direction parallel to said principal faces, relative to the section planes (112, 123, ...) of said first layer (1).

8. A bimorph mirror according to claim 7, **characterized in that** said offset between the piezoelectric elements in at least one direction is equal to half a pitch P at which the piezoelectric elements are disposed in said direction.

## Patentansprüche

1. Bimorpher Spiegel, der eine erste und eine zweite aktive Schicht aus piezoelektrischer Keramik, die mit entgegengesetzten Polaritäten zusammengebaut sind, sowie zumindest eine Elektrode aufweist, die gestattet, dass zumindest eine Krümmung des Spiegels in Abhängigkeit von zumindest einer elektrischen Spannung, die an die piezoelektrischen Keramiken angelegt ist, geändert wird, **dadurch gekennzeichnet, dass** die erste (1) und zweite (2) Schicht aus piezoelektrischer Keramik durch eine mittlere Seele (5) getrennt sind, die einen halbstarren Träger bildet, wobei die Dicke (e) der mittleren Seele (5) zwischen 1 und 80 mm aufweist, und dass dieser gegenüberliegende Vorsteuerelektroden aufweist, die gestatten, dass zumindest eine genannte Krümmung des Spiegels in Abhängigkeit von der gleichen elektrischen Spannung, die an diese angelegt wird und die eine Druckverschiebung für eine der Schichten und eine Zugverschiebung für die andere erzeugt, geändert wird.

2. Bimorpher Spiegel nach Anspruch 1, **dadurch gekennzeichnet, dass** die Dicke (e) der mittleren Seele (5) zwischen 2 und 80 mm aufweist.

3. Bimorpher Spiegel nach Anspruch 2, **dadurch gekennzeichnet, dass** die Dicke (e) der mittleren Seele (5) zwischen 5 und 80 mm aufweist.

4. Bimorpher Spiegel nach einem der vorhergehenden Ansprüche, **dadurch gekennzeichnet, dass** die mittlere Seele durch ein Material gebildet ist, das aus Glas und Siliziumdioxid ausgewählt wurde.

5. Bimorpher Spiegel nach einem der vorhergehenden Ansprüche, **dadurch gekennzeichnet, dass** die erste (1) und zweite (2) Schicht aus piezoelektrischer Keramik sandwichartig zwischen zwei Hüllschichten (3, 4), beispielsweise aus Glas oder Silizium, angeordnet sind.

6. Bimorpher Spiegel nach einem der vorhergehenden Ansprüche, **dadurch gekennzeichnet, dass** dieser eine Gesamtdicke (E) zwischen 10 mm und 150 mm aufweist.

7. Bimorpher Spiegel nach einem der vorhergehenden Ansprüche, **dadurch gekennzeichnet, dass** die erste (1) und zweite (2) Schicht aus piezoelektrischer Keramik aus einer Vielzahl von keramischen Elementen gebildet sind, die nebeneinander in zumindest einer Richtung entlang der Schnittebenenen senkrecht zu den Hauptflächen der Schichten angeordnet sind, und dass die Schnittebenen (212, 213, ...) der zweiten Schicht (2) in einer Richtung parallel zu den Hauptflächen in Bezug auf die Schnittebenen (112, 123, ...) der ersten Schicht (1) versetzt sind.

8. Bimorpher Spiegel nach Anspruch 7, **dadurch gekennzeichnet, dass** der Versatz zwischen den piezoelektrischen Elementen in zumindest einer Richtung gleich der Hälfte eines Schrittes P ist, entlang dem die piezoelektrischen Elemente in dieser Richtung angeordnet sind.
